(19) Europäisches Patentamt
European Patent Office
Office européen des brevets

(11) EP 2 938 659 B1

(12) EUROPEAN PATENT SPECIFICATION

(45) Date of publication and mention
of the grant of the patent:
**24.07.2019 Bulletin 2019/30**

(51) Int Cl.:
*C08L 81/06* (2006.01)   *C08J 5/24* (2006.01)
*C08J 5/04* (2006.01)   *C09J 163/00* (2006.01)
*H01B 1/20* (2006.01)   *H01B 1/24* (2006.01)
*C08J 5/06* (2006.01)   *C08J 5/10* (2006.01)

(21) Application number: **13868196.0**

(22) Date of filing: **23.12.2013**

(86) International application number:
**PCT/IB2013/003008**

(87) International publication number:
**WO 2014/102605 (03.07.2014 Gazette 2014/27)**

(54) **CONDUCTIVE FIBER REINFORCED POLYMER COMPOSITE AND MULTIFUNCTIONAL COMPOSITE**

LEITFÄHIGER FASERVERSTÄRKTER POLYMERVERBUNDSTOFF UND MULTIFUNKTIONSVERBUNDSTOFF

COMPOSITE POLYMÈRE RENFORCÉ PAR DES FIBRES CONDUCTRICES ET COMPOSITE MULTIFONCTIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2012 US 201261746216 P**
**20.11.2013 US 201361906705 P**

(43) Date of publication of application:
**04.11.2015 Bulletin 2015/45**

(73) Proprietor: **Toray Industries, Inc.**
**Tokyo 103-8666 (JP)**

(72) Inventors:
• **NGUYEN, Felix, N.**
**Tacoma, WA 98446 (US)**
• **YOSHIOKA, Kenichi**
**Tacoma, WA 98446 (US)**

(74) Representative: **Mewburn Ellis LLP**
**City Tower**
**40 Basinghall Street**
**London EC2V 5DE (GB)**

(56) References cited:
**WO-A1-2012/116261   WO-A1-2012/124450**
**JP-A- 2009 074 075   JP-A- 2012 211 310**

• **BEKYAROVA E ET AL: "Multiscale carbon nanotube-carbon fiber reinforcement for advanced epoxy composites", LANGMUIR, AMERICAN CHEMICAL SOCIETY, US, vol. 23, no. 7, 27 March 2007 (2007-03-27), pages 3970-3974, XP002549140, ISSN: 0743-7463, DOI: 10.1021/LA062743P [retrieved on 2007-02-28]**

**Description**

The present application provides an innovative fiber reinforced polymer composition comprising a reinforcing fiber and an adhesive composition comprising at least a conductive interfacial material, wherein when cured an interfacial region between the reinforcing fiber and the adhesive composition (herein referred to as 'an interphase') comprises the conductive interfacial material, and the adhesive composition forms good bonds to the reinforcing fiber, thus allowing simultaneous improvements of mechanical properties and z-direction electrical conductivity of the composite.

**Background of the Invention**

When bonding reinforcing fibers together by a resin matrix to create a fiber reinforced polymer composite, the presence of functional groups on the fiber's surface is very critical. In addition, the bond has to be durable when subjected to environmental and/or hostile conditions. Bond strength, i.e., the force per unit of interfacial area required to separate the (cured) resin from the fiber that is in contact with the cured resin, is a measure of adhesion. Maximum adhesion is obtained when a cohesive failure of either the resin or the fiber or both, as opposed to an adhesive failure between the fiber and the resin, is mainly observed.

To make a strong bond, firstly oxygen functional groups are beneficially introduced on the pristine fiber's surface; secondly an adhesion promoter may be selected such that one end of the adhesion promoter is capable of covalently bonding to the oxygen functional groups on the fiber's surface while another end of the adhesion promoter is capable of promoting or participating in chemical interactions with functional groups in the resin. Essentially, the adhesion promoter acts as a bridge connecting the fiber to the bulk resin during curing. A surface treatment such as plasma, UV, corona discharge, or wet electro-chemical treatment is often used to introduce oxygen functional groups onto the fiber's surface.

Ultimately, to achieve the strong bond, there certainly cannot be voids at the interface between the fiber and the resin, i.e., there is sufficient molecular contact between them upon curing. Often, this interface is considered as a volumetric region or an *"interphase"*. The interphase can extend from the fiber's surface a few nanometers up to several micrometers, depending on the chemical composition on the sized fiber's surface, chemical interactions between the fiber and the bulk resin, and the migration of other chemical moieties to the interface during curing. The interphase, therefore, has a very unique composition, and its properties are far different from those of the fiber's surface and the bulk resin. Moreover, the existence of high stress concentrations in the interphase due to the modulus mismatch between the fiber and the resin often makes the composite vulnerable to crack initiation. Such high stress concentrations could be intensified by chemical embrittlement of the resin induced by the fiber and local residual stress due to the thermal expansion coefficient difference, such that when a load is applied a catastrophic failure of the composite can be observed.

Conventionally, inadequate adhesion might allow crack energy to be dissipated along the fiber/matrix interface, but at the great expense of stress transfer capability from the adhesive through the interphase to the fibers. Strong adhesion, on the other hand, often results in an increase in interfacial matrix embrittlement, allowing cracks to initiate in these regions and propagate into the resin-rich areas. In addition, crack energy at a fiber's broken end cannot be relieved along the fiber/matrix interface, and therefore, diverted into neighboring fibers by essentially breaking them. For these reasons, current state-of-the-art fiber composite systems are designed to allow an optimal adhesion level.

In some cases, especially involving carbon fibers, weak to intermediate adhesion levels are desired, especially when an application such as an aircraft's wing needs a high level of z-direction or through thickness electrical conductivity (hereafter referred to as 'electrical conductivity' or simply 'conductivity'). For these cases the conductive paths through thickness are formed from fiber-fiber touching such that the higher the carbon fiber volume is, the higher the conductivity is obtained. The conductive paths through the fibers, however, are significantly sealed when adhesion is improved, i.e., an insulation layer of the matrix material prevents fiber-fiber touching, thus the conductivity relies on the electrical conductivity of the polymer (which is typically very low (about $10^{-13}$ S/m)). Consequently, strong adhesion leads to a significantly reduction in the conductivity of the composite. To regain electrical paths, a conductive material could be incorporated into the resin matrix without changing its strong adhesion to the fibers. Though the conductivity of the resin could be enhanced substantially, only a fraction of the enhancement could be transferred to the composite because the fibers (which occupy typically at least 50% by volume of the composite) would still act as semi-insulators. Alternatively, other attempts tried to coat the fibers with a conductive material, but in turn the high adhesion and/ or fracture toughness of the composite could be destroyed. For example, US20080213498A1 (Drzal et al., Michigan State University, 2008) showed that carbon fibers could be successfully coated with up to 3wt% of graphite nanoplatelets. Bekyarova et al. (Langmuir 23, 3970, 2007) introduced carbon nanotube coated woven carbon fiber fabric. WO2007130979A2 (Kruckenberg et al., Rohr, Inc. and Goodrich Corporation, 2007) has claimed carbon fibers coated with such carbonaceous materials and the like.

WO2012116261A1 (Nguyen et al., Toray Industries Inc., 2012) attempted to create an interphase by a self-assembled process in which an interfacial material is incorporated into a resin and by utilizing surface chemistry of a reinforcing fiber to concentrate the interfacial material in the vicinity of the fiber. This process has been shown to be robust, forming a reinforced interphase that in turn could improve tensile strength of the composite. However, this interphase becomes an insulation layer and dramatically reduces the electrical conductivity of the composite. As a result, there is a need to create a conductive interphase that could provide both good adhesion (and hence high adhesion-related properties) and at least retain the electrical conductivity of carbon fiber through thickness of the cured laminate.

US2013/344305 discloses a sheet-form prepreg comprising carbon fibers and a matrix resin containing thermosetting resin and curing agent together with conductive particles (i) of 1 $\mu$m or smaller in diameter and (ii) of 5 $\mu$m or larger in diameter, plus (iii) thermoplastic particles, wherein (i), (ii) and (iii) are disproportionately distributed in specific parts of the prepreg. JP 2012 211310A provides a prepreg including a resin layer containing a resin particle and a conductive particle whose average particle diameter is larger than that of the resin particle. JP 2009 074075 A provides an epoxy resin composition for a carbon-reinforced composite material containing curing agent and coupling agent. The composition also contains particles which are a combination of resin particles and conductive particles, or are conductive particles formed by covering cores of thermoplastic resin with a conductive material.

## Summary of the Invention

The present invention provides a fiber reinforced polymer composition as defined in the accompanying claims. The composition comprises a reinforcing fiber and an adhesive composition, wherein when cured the adhesive composition forms good bonds to the reinforcing fiber when cured and the fiber reinforced polymer composition has an electrical conductivity of at least 1 S/m. The adhesive composition comprises at least a thermosetting resin, a curing agent and an interfacial material comprising a conductive material, wherein the reinforcing fiber is suitable for concentrating (i.e., adapted to concentrate) the interfacial material in an interfacial region between the reinforcing fiber and the adhesive composition. The interfacial region comprises an adhesion layer and a conductive layer, wherein the adhesion layer is closer to the reinforcing fiber than the conductive layer and has a composition different from the composition of the conductive layer, and wherein the conductive layer comprises at least the interfacial material. The adhesive composition may further comprise at least one of a migrating agent, an accelerator, a thermoplastic resin, a toughener, an interlayer toughener, a conductive material or a combination thereof.

Embodiments of the invention relate to a multifunctional fiber reinforced polymer composition comprising a reinforcing fiber and an adhesive composition, wherein the fiber reinforced polymer composition when cured has a tensile strength providing a translation of at least 70%, and a compression strength of at least 1240 MPa (180 ksi).

Further aspects of the invention relate to a prepreg comprising one of the above fiber reinforced polymer compositions, and a method of manufacturing a composite article comprising curing one of the above fiber reinforced polymer compositions.

## Brief Descriptions of the Drawings

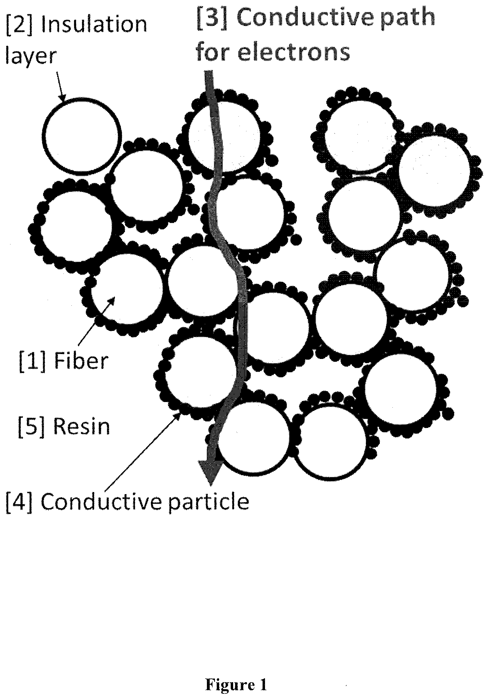

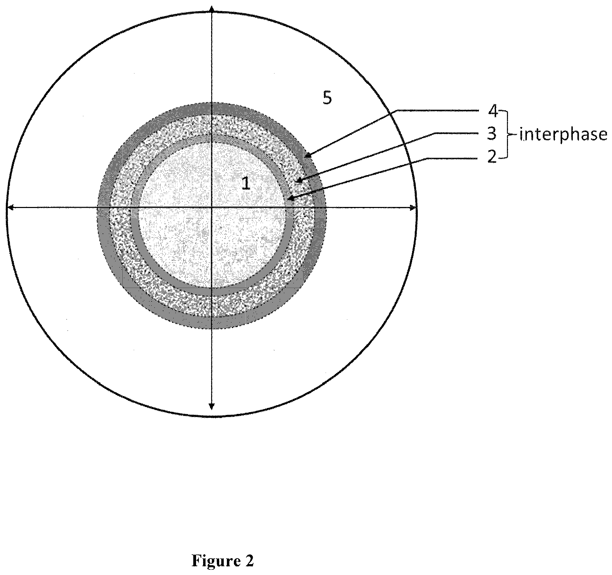

FIG. 1 shows a schematic 90° cross-section view of a cured fiber reinforced polymer composite structure in accordance with an embodiment of the present invention. The conductive particles [4], which may be insoluble or partially soluble, are more concentrated in the vicinity of the fiber [l] than in the bulk resin composition [5]. A conductive path [3] is illustrated to show electron transport in the z-direction (through thickness). The insulation layer [2] disrupts the path through fiber-fiber touching. However, the path is regained by having conductive particles surrounding the fiber. FIG. 2 shows a schematic of a multilayered interphase in accordance with an embodiment of the present invention, including carbon fiber (1). Adhesion layer (2) comprises at least a sizing material and a functional group from the fiber's surface. Conductive layer (3) comprises at least a conductive interfacial material. Outer layer (4) comprises a composition substantially similar to the bulk resin composition (5). The conductive interphase comprises at least layer (2) and layer (3).

## Detailed Description of the Invention

The invention relates to a fiber reinforced polymer composition comprising a reinforcing fiber and an adhesive composition, wherein when cured the adhesive composition forms good bonds to the reinforcing fiber and the fiber reinforced polymer composition has an electrical conductivity in the z-direction or thickness direction (hereafter referred to as 'electrical conductivity' or simply 'conductivity') of at least 1 S/m.

Fiber reinforced polymer composite materials often suffer from low conductivity because the polymer is typically not electrically conductive even though the reinforcing fiber could be, on the other hand, very highly conductive (e.g., carbon fiber). In this case the conductivity relies on fiber-fiber touching and increases with higher volume fraction of the reinforcing fiber. As adhesion between the polymer and the reinforcing fiber is increased for desired mechanical properties, an insulation layer forms around the reinforcing fiber and therefore significantly reduces the conductivity of the composite. As a result, there is a trade-off between adhesion and electrical conductivity. Similarly, there is a trade-off between adhesion and thermal conductivity of the composite. As a result, proper selections of the reinforcing fiber and the adhesive composition to achieve both good bonds between them and an electrical conductivity of at least 1 S/m of the resulting composite are required.

The reinforcing fiber could be any reinforcing fiber having a non-polar surface energy at 30 °C of at least 30 mJ/m$^2$, at least 40 mJ/m$^2$, or even at least 50 mJ/m$^2$ and/or a polar surface energy at 30 °C of at least 2 mJ/m$^2$, at least 5 mJ/m$^2$, or even at least 10 mJ/m$^2$. High surface energies are needed to promote wetting of the adhesive composition on the reinforcing fiber. This condition is necessary to promote good bonds from the adhesive composition.

Non-polar and polar surface energies could be measured by an inverse gas chromatography (IGC) method using vapors of probe liquids and their saturated vapor pressures. IGC can be performed according to Sun and Berg's publications (Advances in Colloid and Interface Science 105 (2003) 151-175 and Journal of Chromatography A, 969 (2002) 59-72). A brief summary is described as follows. Vapors of known liquid probes are carried into a tube packed with solid materials of unknown surface energy and interacted with the surface. Based on the time that a gas traverses through the tube and the retention volume of the gas, the free energy of adsorption can be determined. Hence, the non-polar surface energy can be determined from a series of alkane probes, whereas the polar surface energy can be roughly estimated using two acid/base probes.

Instead of using surface energies as described above for a selection of suitable reinforcing fibers for bonding with the adhesive composition, an interfacial shear strength (IFSS) value of at least 10 MPa, at least 20 MPa, at least 25 MPa, or even at least 30 MPa, determined in a single fiber fragmentation test (SFFT) according to Rich et al. in "Round Robin Assessment of the Single Fiber Fragmentation Test" in Proceeding of the American Society for Composites: 17th Technical conference (2002), paper 158 could be needed. A brief description of SFFT is described as follows. A single fiber composite coupon having a single fiber embedded in the center of a dog-boned cured resin is strained without breaking the coupon until the set fiber length no longer produces fragments. IFSS is determined from the fiber strength, the fiber diameter, and the critical fragment length determined by the set fiber length divided by the number of fragments.

Good adhesion between the adhesive composition and the reinforcing fiber herein is referred to as *"good bonds"* in that one or more components of the adhesive composition chemically react with functional groups found on the reinforcing fiber's surface to form crosslinks. Good bonds in one embodiment can be documented by examining the cured fiber reinforced polymer composition after being fractured under a scanning electron microscope (SEM) for failure modes. Adhesive failure refers to a fracture failure at the interface between the reinforcing fiber and the cured adhesive composition, exposing the fiber's surface with little or no adhesive found on the surface. Cohesive failure refers to a fracture failure which occurs in the cured adhesive composition, wherein the fiber's surface is mainly covered with the adhesive composition. Note that cohesive failure in the fiber may occur, but it is not referred to in the invention herein. The coverage of the fiber surface with the cured adhesive composition could be about 50 % or more, or about 70 % or more. Mixed mode failure refers to a combination of adhesive failure and cohesive failure. Adhesive failure refers to weak adhesion and cohesive failure is strong adhesion, while mixed mode failure results in adhesion somewhere in between weak adhesion and strong adhesion and typically has a coverage of the fiber surface by the cured adhesive composition of about 20 % or more. Mixed mode and cohesive failures herein are referred to as a good bond between the cured adhesive composition and the fiber surface while adhesive failure constitutes a poor bond.

There are no specific limitations or restrictions on the choice of a reinforcing fiber, as long as the effects of the invention are not deteriorated. Examples include carbon fibers, organic fibers such as aramid fibers, silicon carbide fibers, metal fibers (e.g., alumina fibers), boron fibers, tungsten carbide fibers, glass fibers (e.g., S glass, S-1 glass, S-2 glass, S-3 glass, E-glass, L-glass from AGY), and natural/bio fibers. Carbon fiber in particular is used to provide the cured fiber reinforced polymer composition exceptionally high strength and stiffness as well as light weight. Of all carbon fibers, those with a strength of 2000 MPa or higher, an elongation of 0.5% or higher, and modulus of 200 GPa or higher are preferably used. Examples of carbon fibers are those from Toray Industries having a standard modulus of about 200-250 GPa (T300, T300J, T400H, T600S, T700S, T700G), an intermediate modulus of about 250-300 GPa (T800H, T800S, T1000G, M30S, M30G), or a high modulus of greater than 300 GPa (M40, M35J, M40J, M46J, M50J, M55J, M60J).

The form and the arrangement of a plurality of the reinforcing fibers used are not specifically limited. Any of the forms and spatial arrangements of the reinforcing fibers known in the art such as long fibers in a direction, chopped fibers in random orientation, single tow, narrow tow, woven fabrics, mats, knitted fabrics, and braids can be employed. The term "long fiber" as used herein refers to a single fiber that is substantially continuous over 10 mm or longer or a fiber bundle comprising the single fibers. The term "short fibers" as used herein refers to a fiber bundle comprising fibers that are cut into lengths of shorter than 10 mm. Particularly in the end use applications for which high specific strength and high specific elastic modulus are required, a form wherein a reinforcing fiber bundle is arranged in one direction may be most suitable. From the viewpoint of ease of handling, a cloth-like (woven fabric) form is also suitable for the present invention.

For applications of interest using a carbon fiber, in order to achieve high IFSS, the carbon fiber typically is oxidized or surface treated by an available method in the art (e.g., plasma treatment, UV treatment, plasma assisted microwave treatment, and/or wet chemical-electrical oxidization) to increase its concentration of oxygen to carbon (O/C). The O/C concentration can be measured by an X-ray photoelectron spectroscopy (XPS). A desired O/C concentration may be at least 0.05, at least 0.1, or even at least 0.15. The oxidized carbon fiber is coated with a sizing material such as an organic material or organic/inorganic material such as a silane coupling agent or a silane network or a polymer composition compatible and/ or chemically reactive with the adhesive composition to improve bonding strengths. For example, if the adhesive resin composition comprises an epoxy, the sizing material could have functional groups such as epoxy groups, amine groups, amide groups, carboxylic groups, carbonyl groups, hydroxyl groups, and other suitable oxygen-containing or nitrogen-containing groups. Both the O/C concentration on the surface of the carbon fiber and the sizing material collectively are selected to promote adhesion of the adhesive composition to the carbon fiber. There is no restriction on the possible choices of the sizing material and a desired O/C concentration as long as the requirement of surface energies of the carbon fiber for an interphase formation is met and/or the sizing promotes good bonds.

To have good bonds between carbon fibers and the cured adhesive composition an IFSS value of at least 15 MPa could be needed. Alternatively, a measurement of fiber-matrix adhesion could be obtained by interlaminar shear strength (ILSS) described by ASTM D-2344 of the cured fiber reinforced polymer composition. Good bonds could refer to an IFSS of at least 20 MPa, at least 25 MPa, at least 30 MPa or even 35 MPa and/or a value of ILSS of at least 90 MPa (13 ksi), at least 97 MPa (14 ksi), at least 104 MPa (15 ksi), at least 110 MPa (16 ksi), or even at least 117 MPa (17 ksi). Ideally, both an observation of failure modes and an IFSS value are needed to confirm good bonds. However, generally, when either observations of failure modes or an IFSS value cannot be obtained, an ILSS value between 90-97 MPa (13-14 ksi) could indicate a mixed mode failure while an ILSS value above 110 MPa (16 ksi) could indicate a cohesive failure and an ILSS value between 97-104 MPa (14-15 ksi) could indicate either mixed mode or cohesive failure, depending on the reinforcing fiber and the adhesive composition.

Note that the above ranges of IFSS and ILSS for carbon fibers could be used to screen other reinforcing fibers for good bond formation by the adhesive composition. However, depending on their strengths some deviations might be possible.

There are no specific limitations or restrictions on the choice of an adhesive composition, as long as the effects of the invention are not deteriorated. That is, the adhesive composition is required to form good bonds to the selected reinforcing fiber and also, when combined with the reinforcing fiber, meet the desired conductivity requirement of the fiber reinforced polymer composition. An adhesive composition may comprise at least a thermoplastic or at least a thermosetting resin and a curing agent. The latter is more preferred in applications that require high stiffness and bending strengths, and is employed in the claimed invention, while the former is suitable for applications that require high fracture toughness. In both cases, the adhesive composition could further comprise a conductive material, leading to an improved conductivity of the fiber reinforced polymer composition.

"*Conductive*," as used herein, refers to the electrical conductivity of a material. In some cases, it may also refer to the thermal conductivity, or collectively refers to both electrical and thermal conductivities of the material, or its *thermoelectric* property, *i.e.,* its capability to generate an electric potential from a temperature difference, or heat from an electric potential difference. An electrically conductive material herein refers to a material having an electrical conductivity of at least $10^{-13}$ S/m, at least $10^{-10}$ S/m, $10^{-5}$ S/m, or even at least $10^{-1}$ S/m, while a non-conductive material is a material having an electrical conductivity of less than $10^{-13}$ S/m. Examples of suitable conductive materials include, but are not limited to, metals and transition metals (e.g., nickel, copper, silver, zinc, gold, platinum, cobalt, tin, titanium, iron, chromium, aluminum), metal alloys (e.g., aluminum alloys, magnesium alloys, lithium aluminum alloys), carbonaceous materials (e.g., carbon nanotubes, carbon black, carbon nanofibers, graphite, graphene, graphene oxides, graphite nanoplatelets), conductive coated materials, and conductive oxides (e.g., indium tin oxides) and mixtures thereof.

A thermosetting resin may be defined herein as any resin which can be cured with a curing agent or a cross-linker compound by means of an externally supplied source of energy (e.g., heat, light, electromagnetic waves such as microwaves, UV, electron beam, or other suitable methods) to form a three dimensional crosslinked network having the required resin modulus. The thermosetting resin may be selected from epoxy resins, benzoxazine resins, and mixtures thereof, as long as it contributes to the formation of the interphase and the required resin modulus and the good bonds satisfy the above conditions.

From the viewpoint of an exceptional balance of strength, strain, modulus and environmental effect resistance, of the above thermosetting resins, epoxy resins could be used, including mono-, di-functional, and higher functional (or multifunctional) epoxy resins and mixtures thereof. Multifunctional epoxy resins are preferably selected as they provide excellent glass transition temperature (Tg), modulus and even high adhesion to a reinforcing fiber. These epoxies are prepared from precursors such as amines (e.g., epoxy resins prepared using diamines and compounds containing at least one amine group and at least one hydroxyl group such as tetraglycidyl diaminodiphenyl methane, triglycidyl-p-aminophenol, triglycidyl-m-aminophenol, triglycidyl aminocresol and tetraglycidyl xylylenediamine and their isomers), phenols (e.g., bisphenol A epoxy resins, bisphenol F epoxy resins, bisphenol S epoxy resins, bisphenol R epoxy resins, phenol-novolac epoxy resins, cresol-novolac epoxy resins and resorcinol epoxy resins), naphthalene epoxy resins, dicyclopentadiene epoxy resins, epoxy resins having a biphenyl skeleton, isocyanate-modified epoxy resins and compounds having a carbon-carbon double bond (e.g., alicyclic epoxy resins). It should be noted that the epoxy resins are not restricted to the examples above. Halogenated epoxy resins prepared by halogenating these epoxy resins can also be used. Furthermore, mixtures of two or more of these epoxy resins, and compounds having one epoxy group or monoepoxy compounds such as glycidylaniline, glycidyl toluidine or other glycidylamines (particularly glycidylaromatic amines) can be employed in the formulation of the thermosetting resin matrix.

Examples of commercially available products of bisphenol A epoxy resins include "jER (registered trademark)" 825, "jER (registered trademark)" 828, "jER (registered trademark)" 834, "jER (registered trademark)" 1001, "jER (registered trademark)" 1002, "jER (registered trademark)" 1003, "jER (registered trademark)" 1003F, "jER (registered trademark)" 1004, "jER (registered trademark)" 1004AF, "jER (registered trademark)" 1005F, "jER (registered trademark)" 1006FS, "jER (registered trademark)" 1007, "jER (registered trademark)" 1009 and "jER (registered trademark)" 1010 (which are manufactured by Mitsubishi Chemical Corporation). Examples of commercially available products of the brominated bisphenol A epoxy resin include "jER (registered trademark)" 505, "jER (registered trademark)" 5050, "jER (registered trademark)" 5051, "jER (registered trademark)" 5054 and "jER (registered trademark)" 5057 (which are manufactured by Mitsubishi Chemical Corporation). Examples of commercially available products of the hydrogenated bisphenol A epoxy resin include ST5080, ST4000D, ST4100D and ST5100 (which are manufactured by Nippon Steel Chemical Co., Ltd.).

Examples of commercially available products of bisphenol F epoxy resins include "jER (registered trademark)" 806, "jER (registered trademark)" 807, "jER (registered trademark)" 4002P, "jER (registered trademark)" 4004P, "jER (registered trademark)" 4007P, "jER (registered trademark)" 4009P and "jER (registered trademark)" 4010P (which are manufactured by Mitsubishi Chemical Corporation), and "Epotohto (registered trademark)" YDF2001 and "Epotohto (registered trademark)" YDF2004 (which are manufactured by Nippon Steel Chemical Co., Ltd.). An example of a commercially available product of the tetramethyl-bisphenol F epoxy resin is YSLV-80XY (manufactured by Nippon Steel Chemical Co., Ltd.).

An example of a bisphenol S epoxy resin is "Epiclon (registered trademark)" EXA-154 (manufactured by DIC Corporation).

Examples of commercially available products of tetraglycidyl diaminodiphenyl methane resins include "Sumiepoxy (registered trademark)" ELM434 (manufactured by Sumitomo Chemical Co., Ltd.), YH434L (manufactured by Nippon Steel Chemical Co., Ltd.), "jER (registered trademark)" 604 (manufactured by Mitsubishi Chemical Corporation), and "Araldite (registered trademark)" MY720 and MY721 (which are manufactured by Huntsman Advanced Materials). Examples of commercially available products of triglycidyl aminophenol or triglycidyl aminocresol resins include "Sumiepoxy (registered trademark)" ELM100 (manufactured by Sumitomo Chemical Co., Ltd.), "Araldite (registered trademark)" MY0500, MY0510 and MY0600 (which are manufactured by Huntsman Advanced Materials) and "jER (registered trademark)" 630 (manufactured by Mitsubishi Chemical Corporation). Examples of commercially available products of tetraglycidyl xylylenediamine and hydrogenated products thereof include TETRAD-X and TETRAD-C (which are manufactured by Mitsubishi Gas Chemical Company, Inc.).

Examples of commercially available products of phenol-novolac epoxy resins include "jER (registered trademark)" 152 and "jER (registered trademark)" 154 (which are manufactured by Mitsubishi Chemical Corporation), and "Epiclon (registered trademark)" N-740, N-770 and N-775 (which are manufactured by DIC Corporation).

Examples of commercially available products of cresol-novolac epoxy resins include "Epiclon (registered trademark)" N-660, N-665, N-670, N-673 and N-695 (which are manufactured by DIC Corporation), and EOCN-1020, EOCN-102S and EOCN-104S (which are manufactured by Nippon Kayaku Co., Ltd.).

An example of a commercially available product of a resorcinol epoxy resin is "Denacol (registered trademark)" EX-201 (manufactured by Nagase chemteX Corporation).

Examples of commercially available products of naphthalene epoxy resins include HP-4032, HP4032D, HP-4700, HP-4710, HP-4770, EXA-4701, EXA-4750, EXA-7240 (which are manufactured by DIC Corporation)

Examples of commercially available products of dicyclopentadiene epoxy resins include "Epiclon (registered trademark)" HP7200, HP7200L, HP7200H and HP7200HH (which are manufactured by DIC Corporation), "Tactix (registered trademark)" 558 (manufactured by Huntsman Advanced Material), and XD-1000-1L and XD-1000-2L (which are manufactured by Nippon Kayaku Co., Ltd.).

Examples of commercially available products of epoxy resins having a biphenyl skeleton include "jER (registered trademark)" YX4000H, YX4000 and YL6616 (which are manufactured by Mitsubishi Chemical Corporation), and NC-3000 (manufactured by Nippon Kayaku Co., Ltd.).

Examples of commercially available products of isocyanate-modified epoxy resins include AER4152 (manufactured by Asahi Kasei Epoxy Co., Ltd.) and ACR1348 (manufactured by ADEKA Corporation) each of which has an oxazolidone ring.

The thermosetting resin may comprise both a tetrafunctional epoxy resin (in particular, a tetraglycidyl diaminodiphenyl methane epoxy resin) and a difunctional glycidylamine, in particular a difunctional glycidyl aromatic amine such as glycidyl aniline or glycidyl toluidine from the view point of the required resin modulus. Another difunctional epoxy resin, such as a difunctional bisphenol A or F/epichlorohydrin epoxy resin could be used to provide an increase in a flexural deflection of the cured adhesive composition; the average epoxy equivalent weight (EEW) of the difunctional epoxy resin may be, for example from 177 to 1500, for example. For example, the thermosetting resin may comprise 50 to 70 weight % tetrafunctional epoxy resin, 10 to 30 weight percent difunctional bisphenol A or F/epichlorohydrin epoxy resin, and 10 to 30 weight percent difunctional glycidyl aromatic amine.

The curing agent is also referred to as a cross-linker compound; it has at least one active group which reacts with the thermosetting resin and collectively provides the required resin modulus and/or promotes adhesion. For the above epoxy resins, examples of suitable curing agents include polyamides, dicyandiamide [DICY], amidoamines (e.g., aromatic amidoamines such as aminobenzamides, aminobenzanilides, and aminobenzenesulfonamides), aromatic diamines (e.g., diaminodiphenylmethane, diaminodiphenylsulfone [DDS]), aminobenzoates (e.g., trimethylene glycol di-p-aminobenzoate and neopentyl glycol di-p-amino-benzoate), aliphatic amines (e.g., triethylenetetramine, isophoronediamine), cycloaliphatic amines (e.g., isophorone diamine), imidazole derivatives, guanidines such as tetramethylguanidine, carboxylic acid anhydrides (e.g., methylhexahydrophthalic anhydride), carboxylic acid hydrazides (e.g., adipic acid hydrazide), phenol-novolac resins and cresol-novolac resins, carboxylic acid amides, polyphenol compounds, polysulfides and mercaptans, and Lewis acids and bases (e.g., boron trifluoride ethylamine, tris-(diethylaminomethyl) phenol). Depending on the desired properties of the cured fiber reinforced epoxy composition, a suitable curing agent or suitable combination of curing agents is selected from the above list. For example, dicyandiamide will generally provide the product with good elevated-temperature properties, good chemical resistance, and a good combination of tensile and peel strength. Aromatic diamines, on the other hand, will typically give high heat and chemical resistance and high modulus. Aminobenzoates will generally provide excellent tensile elongation though they often provide inferior heat resistance compared to aromatic diamines. In the present invention a curing agent comprises an aromatic diamine, an amidoamine or a mixture thereof. In an example when DDS is combined with an aromatic amidoamine (e.g., 3-aminobenzamide), an excellent balance of thermal and mechanical properties and environmental resistance could be achieved.

Incorporation of a conductive material in the adhesive composition in some cases can meet both the requirements of adhesion and conductivity. In such cases, some of the conductive paths through thickness could be gained without penalizing adhesion. However, as better adhesion is needed for improved mechanical performance, increasing conductivity of the resin with a higher amount of the conductive materials could be ineffective as the conductive paths through the conductive fibers could be totally blocked, and therefore, only a fraction of the enhancement could be transferred to the composite because the fibers (which occupy typically at least 50% by volume of the composite) would still act as semi-insulators. To resolve this drawback, the adhesive composition comprises an interfacial material comprising a conductive material, wherein the reinforcing fiber is suitable for concentrating the interfacial material in an interfacial region between the reinforcing fiber and the adhesive composition.

The interfacial material used in the present invention comprises a conductive material, a mixture of conductive materials or a mixture of a conductive material and a non-conductive material (herein also referred to as 'conductive interfacial material'). Examples of suitable conductive interfacial materials are carbonaceous materials, namely carbon nanotubes, carbon black, and mixtures thereof.

The interfacial material is insoluble or partially soluble in the adhesive composition after the adhesive composition is cured, and has a longest dimension of less than the fiber's diameter so that it can penetrate a plurality of the reinforcing fibers, or even less than 5 $\mu$m, less than 1 $\mu$m, less than 500 nm, or even less than 250 nm. The interfacial material could be present in the adhesive composition in an amount of 1-10 phr to form an interphase comprising at least a monolayer of the interfacial material, depending on its geometric dimensions and density, a higher amount could be desirable if the interfacial material is required to increase certain properties of the adhesive composition such as modulus and/or strain in addition to its electrical and/or thermal and/or thermoelectric properties, thus benefiting the resulting fiber reinforced polymer composition.

In an embodiment, the interfacial material could have a functional group that is matched to the surface chemistry of the reinforcing fiber such that the fiber is capable of concentrating the interfacial material in its vicinity. The reinforcing fiber that is capable of forming good bonds with the adhesive composition as discussed above could also be capable of concentrating the interfacial material in an interfacial region between the reinforcing fiber and the cured adhesive composition (herein referred to as an 'interphase' or a 'conductive interphase'). The functional group of the interfacial material could be at least one or more of a nitrogen-containing group (e.g., an amine group), an oxygen-containing group (e.g., a hydroxyl group, a methacrylate group, a carboxylic group), a sulfur-containing functional group (e.g., a thio group), or an amide group (e.g., an organic amide, sulphonamide, phosphoramide). For example, if the reinforcing fiber has an epoxy group or the surface is specified to be compatible with an epoxy resin, the surface of the interfacial material could have at least an epoxy group, a hydroxyl group or a carboxylic group. In another embodiment, the surface of the reinforcing fiber contains a first functional group and the surface of the interfacial material contains a second functional group, wherein the first and second functional groups are capable of reacting with each other. In yet another embodiment the interfacial material could be a carbon black, a graphene, a graphite nanoplatelet, a carbon nanotube, a carbon nanofiber or a combination thereof comprising at least an epoxy group.

The interphase of the cured fiber reinforced polymer composition could be formed more robustly when an optional migrating agent is present in the adhesive composition. The migrating agent herein is any material inducing one or more components in the adhesive composition to be more concentrated in an interfacial region between the fiber and the adhesive composition upon curing of the adhesive composition. This phenomenon is a migration process of the interfacial material to the vicinity of the fiber, which hereafter is referred to as particle migration or interfacial material migration. In such a case, it is said that the interfacial material is more compatible with the reinforcing fiber than the migration agent. In some cases, it can be said that the interfacial material is attracted to the reinforcing fiber via electrostatic forces. 'Compatible/compatibility' herein refers to chemically like molecules, or chemically alike molecules, or molecules whose chemical makeup comprises similar atoms or structure, or molecules that associate with one another and possibly chemically interact with one another. In some contexts, it implies solubility of one component in another component and/or reactivity of one component with another component, or also implies that one surface has a charge opposite to a charge on the other surface. "Not compatible/ incompatible" or "does not like" might refer to a phenomenon wherein the migrating agent, when present at a certain amount (concentration) in the adhesive composition, causes the interfacial material, which in the absence of the migrating agent would have been uniformly distributed in the adhesive composition after curing, to be not uniformly distributed to some extent.

Any material found more concentrated in a vicinity of the fiber than further away from the fiber or present in the interfacial region or the interphase between the fiber's surface to a definite distance into the cured adhesive composition constitutes an interfacial material in the present adhesive composition. Note that one interfacial material can play the role of a migrating agent for another interfacial agent if it can cause the second interfacial material to have a higher concentration in a vicinity of the fiber than further away from the fiber upon curing of the adhesive composition.

The migrating agent may comprise a polymer, a thermoplastic resin, a thermosetting resin, or a combination thereof. In one embodiment of the invention, the migrating agent is a thermoplastic polymer or combination of thermoplastic polymers. Typically, the thermoplastic polymer additives are selected to modify the viscosity of the thermosetting resin for processing purposes, and/or enhance its toughness, and yet could affect the distribution of the interfacial material in the adhesive composition to some extent. The thermoplastic polymer additives, when present, may be employed in any amount up to 50 phr, or even up to 35 phr for ease of processing. A suitable amount is determined based on its migrating-driving ability versus mobility of the interfacial material restricted by viscosity of the adhesive composition. Note that when the viscosity of the adhesive composition is adequately low, a uniform distribution of the interfacial material in the adhesive composition might not be necessary to promote particle migration onto or near the fiber's surface. As the viscosity of the adhesive composition increases to some extent, a uniform distribution of the interfacial material in the adhesive composition could help improve particle migration onto or near the fiber's surface.

For the migrating agent, one could use, but is not limited to, the following thermoplastic materials such as polyvinyl formals, polyamides, polycarbonates, polyacetals, polyphenyleneoxides, polyphenylene sulfides, polyarylates, polyesters, polyamideimides, polyimides, polyetherimides, polyimides having phenyltrimethylindane structure, polysulfones, polyethersulfones, polyetherketones, polyetheretherketones, polyaramids, polyethernitriles, polybenzimidazoles, their derivatives and their mixtures thereof.

One could use as the migrating agent aromatic thermoplastic polymer additives which do not impair the high thermal resistance and high elastic modulus of the resin. The selected thermoplastic polymer additive could be soluble in the resin to a large extent to form a homogeneous mixture. The thermoplastic polymer additives could be compounds having aromatic skeletons which are selected from the group consisting of polysulfones, polyethersulfones, polyamides, polyamideimides, polyimides, polyetherimides, polyetherketones, and polyetheretherketones, their derivatives, the alike or similar polymers, and mixtures thereof. Polyethersulfones and polyetherimides and mixtures thereof could be of interest due to their exceptional migrating-drive abilities. Suitable polyethersulfones, for example, may have a number average molecular weight of from about 10,000 to about 75,000.

When both migrating agent and interfacial material are present in the adhesive compositions, the migrating agent and the interfacial material may be present in a weight ratio of migrating agent to interfacial material of from about 0.1 to about 30, or from about 0.1 to about 20. This range can be optimized necessarily for particle migration and subsequently the interphase formation.

In the invention, the interfacial region between the reinforcing fiber and the adhesive composition comprises at least the interfacial material to form a reinforced interphase necessary to reduce stress concentration in this region. The composition of the reinforced interphase could be very unique for each fiber reinforced polymer composition to achieve desired properties, even though this may not be capable of being quantitatively documented due to the limitations of current state-of-the-art analytical instruments, and yet presumably comprises functional groups on the fiber surface or surface chemistry, sizing material, interfacial material, and other component(s) in the bulk resin that could migrate into the vicinity of the reinforcing fibers. For carbon fibers in particular, surface functional groups might depend on the modulus of carbon fibers, their surface characteristics, and the type of surface treatment used.

In one embodiment, the interphase comprises an adhesion layer closer to the reinforcing fiber comprising at least functional groups on the fiber surface and a conductive layer closer to the bulk adhesive composition comprising at least the conductive interfacial material. The adhesion layer is responsible for the good adhesion between the reinforcing fiber and the cured adhesive composition. In order to create the reinforced interphase it is required to have a reinforcing fiber having at least a functional group that can react with at least one component of the adhesive composition and to have the surface chemistry of the reinforcing fiber be compatible with the surface chemistry of the interfacial material. Formation of the adhesion layer can occur regardless of the presence of the interfacial material while formation of the conductive layer could be further driven by the migrating agent. The adhesion layer might have a thickness no more than 100 nm. A thinner adhesion layer could be more effective than a thicker adhesion layer to drive failure to take place in the conductive layer, or between the conductive layer and the bulk adhesive composition, or even in the bulk adhesive composition, allowing the fiber reinforced polymer composition to sustain a higher load. The interfacial material is concentrated in-situ in the conductive layer during curing of the adhesive composition such that the interfacial material has a gradient in concentration, i.e., the interfacial material is more concentrated when closer to the adhesion layer.

The adhesive composition may optionally include an accelerator. There are no specific limitations or restrictions on the choice of a compound or combination of compounds as the accelerator, as long as it can accelerate reactions between the resin and the curing agent and does not deteriorate the effects of the invention. Examples include urea compounds, sulfonate compounds, boron trifluoride piperidine, p-t-butylcatechol, sulfonate compounds, tertiary amines or salts thereof, imidazoles or salts thereof, phosphorus curing accelerators, metal carboxylates and Lewis or Bronsted acids or salts thereof. Examples of suitable urea compounds include N,N-dimethyl- N'- (3,4-dichlorophenyl) urea, toluene bis(dimethylurea), 4,4'-methylene bis (phenyl dimethylurea), and 3-phenyl- 1,1-dimethylurea. Commercial examples of such urea compounds include DCMU99 (manufactured by Hodogaya Chemical Co., Ltd.), and Omicure (registered trademark) 24, 52 and 94 (all manufactured by CVC Specialty Chemicals, Inc.). Commercial products of an imidazole compound or derivative thereof include 2MZ, 2PZ and 2E4MZ (all manufactured by Shikoku Chemicals Corporation). Examples of suitable Lewis acid catalysts include complexes of a boron trihalide and a base, such as a boron trifluoride piperidine complex, boron trifluoride monoethyl amine complex, boron trifluoride triethanol amine complex, and boron trichloride octyl amine complex. Examples of sulfonate compounds include methyl p-toluenesulfonate, ethyl p-toluenesulfonate and isopropyl p-toluenesulfonate.

The adhesive composition optionally may contain additional additives such as a toughener, an interlayer toughener, or a combination thereof to further improve mechanical properties such as toughness or strength or physical/thermal properties of the cured fiber reinforced polymer composition as long as the effects of the present invention are not deteriorated.

One or more polymeric and/or inorganic tougheners can be used. The toughener may be uniformly distributed in the form of particles in the cured fiber reinforced polymer composition. The particles could be less than 5 microns ($\mu$m) in diameter, or even less than 1 $\mu$m in diameter. The shortest dimension of the particles could be less than 300 nm. When a toughener is needed to toughen the thermosetting resin in the fiber bed, the longest dimension of a majority of the particles could be no more than 1 $\mu$m. A filtering effect in that particles could be concentrated outside a plurality of the reinforcing fibers could result if the longest dimension is greater than 1 $\mu$m. Such tougheners include, but are not limited to, elastomers, branched polymers, hyperbranched polymers, dendrimers, rubbery polymers, rubbery copolymers, block copolymers, core-shell particles, oxides or inorganic materials such as clay, polyhedral oligomeric silsesquioxanes (POSS), carbonaceous materials (e.g., carbon black, carbon nanotubes, carbon nanofibers, fullerenes), ceramics and silicon carbides, with or without surface modification or functionalization. Examples of block copolymers include the copolymers whose composition is described in US 6894113 (Court et al., Atofina, 2005) and include "Nanostrength®" SBM (polystyrene-polybutadiene-polymethacrylate), and AMA (polymethacrylate-polybutylacrylate-polymethacrylate), both produced by Arkema. Other suitable block copolymers include Fortegra® and the amphiphilic block copolymers described in US 7820760B2, assigned to Dow Chemical. Examples of known core-shell particles include the core-shell (dendrimer) particles whose compositions are described in US20100280151A1 (Nguyen et al., Toray Industries, Inc., 2010) for an amine branched polymer as a shell grafted to a core polymer polymerized from polymerizable monomers containing unsaturated carbon-carbon bonds, core-shell rubber particles whose compositions are described in EP 1632533A1 and EP 2123711A1 by Kaneka Corporation, and the "KaneAce MX" product line of such particle/epoxy blends whose particles have a polymeric core polymerized from polymerizable monomers such as butadiene, styrene, other unsaturated carbon-carbon bond monomer, or their combinations, and a polymeric shell compatible with the epoxy, typically polymethylmethacrylate, polyglycidylmethacrylate, polyacrylonitrile or similar polymers. Also suitable as block copolymers in the present invention are the "JSR SX" series of carboxylated polystyrene/polydivinylbenzenes produced by JSR Corporation; "Kureha Paraloid" EXL-2655 (produced by Kureha Chemical Industry Co., Ltd.), which is a butadiene alkyl methacrylate styrene copolymer; "Stafiloid" AC-3355 and TR-2122 (both produced by Takeda Chemical Industries, Ltd.), each of which are acrylate methacrylate copolymers; and "PARALOID" EXL-2611 and EXL-3387 (both produced by Rohm & Haas), each of which are butyl acrylate methyl methacrylate copolymers. Examples of suitable oxide particles include Nanopox® produced by nanoresins AG. This is a master blend of functionalized nanosilica particles and an epoxy.

The interlayer toughener could be one or more thermoplastics, one or more elastomers, or combinations of one or more elastomers and one or more thermoplastics, or combinations of an elastomer and an inorganic material such as glass, or pluralities of nanofibers or micronfibers. The interlayer toughener could be in the form of a particulate or a sheet with a desired thickness (e.g., film, a mat, a woven or a non-woven fabric/veil) and is preferred to be concentrated between two pluralities of the reinforcing fibers in the fiber reinforced polymer composition. In some cases, the sheet form is preferred for ease of manufacturing of the fiber reinforced polymer composition. If the interlayer toughener is in particulate form, the average particle size of the interlayer tougheners could be no more than 100 $\mu$m, or 10-50 $\mu$m, to keep them in the interlayer after curing to provide maximum toughness enhancement. The particles are said to be localized outside of a plurality of the reinforcing fibers. Such particles are generally employed in amounts of up to about 30%, or up to about 15% by weight (based upon the weight of total resin content in the composite composition). Examples of suitable thermoplastic materials include polyamides. Known polyamide particles include SP-500, produced by Toray Industries, Inc., "Orgasol®" produced by Arkema, and Grilamid® TR-55 produced by EMS-Grivory, nylon-6, nylon-12, nylon 6/12, nylon 6/6, and Trogamid® CX by Evonik. If the toughener has a fibrous form, it can be deposited on either surface of a mat of a plurality of the reinforcing fibers impregnated by the adhesive composition. The interlayer toughener could further comprise a curable functional group as defined above that reacts with the adhesive composition. The interlayer toughener could be a conductive material or coated with a conductive material or combination of a conductive material and a non-conductive material to regain z-direction electrical and/or thermal conductivity of the cured fiber reinforced polymer composition that was lost by the introduction of the resin-rich interlayers.

Embodiments of the invention relate to a multifunctional fiber reinforced polymer composition comprising a reinforcing fiber and an adhesive composition, wherein the fiber reinforced polymer composition when cured has an electrical conductivity of at least 1 S/m, an interlaminar shear strength (ILSS) of at least 90 MPa (13 ksi), a tensile strength providing a translation of at least 70 %, and a compression strength of at least 1240 MPa (180 ksi). 'Multifunctional/multifunctionality' herein refers to the capability of the composite to carry loads plus at least one non-load carrying function such as electrical, thermal, thermoelectric, sensing, or health monitoring.

In this embodiment, a reinforcing fiber and an adhesive composition are required; Examples of suitable reinforcing fibers and adhesive compositions were discussed above.

In one embodiment, the adhesive composition comprises at least a thermosetting resin and a curing agent selected from but not limited to the aforementioned examples such that when the adhesive composition is cured it could have a flexural resin modulus (hereafter called *"resin modulus",* dry measured at room temperature in accordance with a three point bend method described in ASTM D-790) of at least 2.8 GPa, at least 3.5 GPa, at least 4.0 GPa, at least 4.5 GPa, or even at least 5.0 GPa. Note that a higher resin modulus typically leads to a lower flexural deflection. The higher resin modulus provides the cured fiber reinforced polymer composition excellent compression strength, open-hole compression strength and 0° flexural strength in that a higher resin modulus tends to provide the higher strengths and in some cases tension strength and/or 90° flexural strength might be sacrificed to some extent. Yet, when the cured adhesive composition has a flexural deflection of 2 mm, at least 3 mm or even at least 4 mm, the cured fiber reinforced polymer composition can maintain or improve those strengths.

In another embodiment, in order to achieve high resin modulus for the adhesive resin composition comprising an epoxy resin, epoxy resins having more than two epoxy groups per monomer are suitable. Either an epoxy resin or a curing agent or both could contain at least an amide group to provide both high resin modulus and exceptional adhesion to the reinforcing fibers. The amide group when incorporated in a cured epoxy network could increase resin modulus without penalizing significant strain due to hydrogen bond formations. Such a thermosetting agent, curing agent or additive(s) comprising the amide group or other groups having the aforementioned characteristics is referred to herein as an epoxy fortifying agent or an epoxy fortifier. In such a case a resin modulus of greater than 3.5 GPa and a flexural deflection of at least about 3 mm could be observed. Such systems are important to improve both compressive as well as fracture toughness properties of the fiber reinforced polymer composition. Increasing the number of benzene rings that such a compound has generally leads to a higher resin modulus. In addition, in another embodiment an isomer of either the thermosetting or the curing agent can be used. The term isomers as used herein refers to compounds comprising identical numbers of atoms and groups, wherein the locations of one or more groups are different. For example, the amide group and the amine group of an aminobenzamide could be located relative to each other on a benzene ring at ortho (1, 2), meta (1, 3), or para (1, 4) positions to form 2-aminobenzamide, 3-aminobenzamide, and 4-aminobenzamide, respectively. Placing the groups at positions which are ortho or meta to each other tends to result in a higher resin modulus as compared to the resin modulus obtained when the groups are positioned para to each other. In another embodiment, a curing agent may comprise at least an amide group and an aromatic group, wherein the amide group is selected from an organic amide group, a sulfonamide group or a phosphoramide group, or collectively their combinations. The amide group provides not only improved adhesion of the adhesive composition to the reinforcing fiber, but also promotes high resin modulus without penalizing strain due to hydrogen bond formations. The curing agent additionally comprises one or more curable functional groups such as nitrogen-containing groups (e.g., an amine group), a hydroxyl group, a carboxylic acid group, or an anhydride group. Amine groups in particular tend to provide higher crosslink density and hence improved resin modulus. A curing agent having at least an amide group and an amine group is herein referred to as an "amidoamine" curing agent. Curing agents having a chemical structure which comprises at least an aromatic group, an amide group and an amine group are referred to herein as "aromatic amidoamines." Generally speaking, increasing the number of benzene rings that an aromatic amidoamine has tends to result in a higher resin modulus.

The additional curable functional group and/or the amide group may be substituted on an aromatic ring. Aromatic amidoamines, for example, are suitable for use as the curing agent in the present invention. Examples of the above-mentioned curing agents include, but are not limited to, benzamides, benzanilides, and benzenesulfonamides (including not only the base compounds but substituted derivatives, such as compounds wherein the nitrogen atom of the amide group and/or the benzene ring is substituted with one or more substituents such as alkyl groups, aryl groups, aralkyl groups, non-hydrocarbyl groups and the like), aminobenzamides and derivatives or isomers thereof, including compounds such as anthranilamide (o-aminobenzamide, 2-aminobenzamide), 3-aminobenzamide, 4-aminobenzamide, aminoterephthalamides and derivatives or isomers thereof such as 2-aminoterephthalamide, N,N'-bis(4-aminophenyl) terephthalamide, diaminobenzanilides and derivatives or isomers thereof such as 2,3-diaminobenzanilide, 3,3-diaminobenzanilide, 3,4-diaminobenzanilide, 4,4-diaminobenzanilide, aminobenzenesulfonamides and derivatives or isomers thereof such as 2-aminobenzenesulfonamide, 3-aminobenzenesulfonamide, 4-aminobenzenesulfonamide (sulfanilamide), 4-(2-aminoethyl)benzenesulfonamide, and N-(phenylsulfonyl)benzenesulfonamide, and sulfonylhydrazides such as p-toluenesulfonylhydrazide. Among the aromatic amidoamine curing agents, aminobenzamides, aminoterephthalamides, diaminobenzanilides, and aminobenzenesulfonamides are suitable to provide excellent resin modulus and ease of processing.

Another method to achieve the required resin modulus could be to use a combination of the above epoxy resins and benzoxazine resins for the required thermosetting resin. In this case, the benzoxazine resin behaves as a curing agent and no additional curing agent is required. An accelerator as defined above, however, might be used to speed up the curing process. Examples of suitable benzoxazine resins include, but are not limited to, multi-functional n-phenyl benzoxazine resins such as phenolphthaleine based, thiodiphenyl based, bisphenol A based, bisphenol F based, and/or dicyclopentadiene based benzoxazines. When an epoxy resin or a mixture of epoxy resins with different functionalities is used with a benzoxazine resin or a mixture of benzoxazine resins of different kinds, the weight ratio of the epoxy resin(s) to the benzoxazine resin(s) could be between 0.01 and 100. Yet another method is to incorporate high modulus additives into the adhesive composition. Examples of high modulus additives include, but are not limited to, oxides (e.g., silica), clays, polyhedral oligomeric silsesquioxanes (POSS), carbonaceous materials (e.g., carbon nanotubes with and without substantial alignment, carbon nanoplatelets, carbon nanofibers), fibrous materials (e.g., nickel nanostrand, halloysite), ceramics, silicon carbides, diamonds, and mixtures thereof.

In addition to the above, in one embodiment, the adhesive composition further comprises a migrating agent and one or more interfacial materials, wherein the one or more interfacial materials are more concentrated in the vicinity of the reinforcing fiber than further away after curing of the fiber reinforced polymer composition, wherein at least one of the one or more interfacial materials is a conductive material. There are no restrictions or limitations on selecting the interfacial material and migrating agent as long as the effects of the invention are not deteriorated. Examples of conductive interfacial materials and migrating agents were discussed above. Non-conductive interfacial materials could be, but are not limited to, polymers, core-shell rubber particles, oxides, silicon-based materials. Functional group requirements for these materials for the migration process have been discussed above.

The interfacial region between the reinforcing fiber and the adhesive composition comprises at least the one or more interfacial materials to form a reinforced interphase necessary to reduce stress concentration in this region and allow a substantially improved envelope performance of the cured reinforced polymer composition, which could not be achieved without such a reinforced interphase. In order to create the reinforced interphase it is required to have the reinforcing fiber provide a surface chemistry compatible with the surface chemistry of the interfacial material and optionally a migrating agent is needed to further promote the migration of the interfacial material into a vicinity of the reinforcing fiber. The interfacial material is concentrated in-situ in the interfacial region during curing of the fiber reinforced polymer composition such that the interfacial material has a gradient in concentration in the interfacial region, i.e., the interfacial material is more concentrated closer to the reinforcing fiber than further away. A combination of conductive and non-conductive interfacial materials targeting both desired mechanical properties and electrical properties of the composite can be tailored in the adhesive composition that subsequently in the presence of the migrating agents migrate to the interfacial region. For example, core-shell rubber particles can be used with carbon black for both tensile-related properties and conductivity while silica particles can be used with carbon black for both compressive-related properties and conductivity.

The interfacial material could be a core-shell material comprising at least a core material for the mechanical function and at least a shell material for the conductivity function. The core material could be selected from a polymer (e.g., linear polymers, branched polymers, hyperbranched polymers, dendrimers, copolymers and block copolymers) or inorganic materials (e.g., metals, oxides, carbonaceous materials, silicon-based materials), while the shell is a conductive material such as a metal or a carbonaceous material. Such interfacial materials are herein referred to multifunctional interfacial materials wherein either the core, the shell or both could comprise more than the aforementioned materials and could have discrete layers or layers with a gradient concentration. A multifunctional interphase herein comprises the multifunctional interfacial material or combination of interfacial materials having the combined functions of interest and distributed in discrete layers with gradient concentrations.

The adhesive composition might further comprise at least one of an accelerator, a thermoplastic resin, a conductive material, a toughener, an interlayer toughener, or a combination thereof. The interlayer toughener further comprises a conductive material, a non-conductive material or a combination thereof. There are no restrictions or limitation of choice of these components as long as the effects of the invention are not deteriorated. Examples of these components were discussed above.

In one embodiment, the resulting multifunctional fiber reinforced polymer with the reinforced interphase could have primarily at least at least 90 MPa (13 ksi), or even at least 104 MPa (15 ksi) of interlaminar shear strength, and a conductivity of at least 1 S/m and furthermore at least 1240 MPa (180 ksi), at least 1380 MPa (200 ksi), or even at least 1520 MPa (220 ksi) of compression strength, and at least 70 % and up to 100 % translation of tensile strength.

In all embodiments related to the above fiber reinforced polymer compositions, the curing agent(s) are employed in an amount up to about 75 parts by weight per 100 parts by weight of total thermosetting resin (75 phr). The curing agent might also be used in an amount higher or lower than a stoichiometric ratio between the thermosetting resin equivalent weight and the curing agent equivalent weight to increase resin modulus or glass transition temperature or both. In such cases, an equivalent weight of the curing agent is varied by the number of reaction sites or active hydrogen atoms and is calculated by dividing its molecular weight by the number of active hydrogen atoms. For example, an amine equivalent weight of 2-aminobenzamide (molecular weight of 136) could be 68 for 2 functionality, 45.3 for 3 functionality, 34 for 4 functionality, and 27.2 for 5 functionality.

There are no specific limitations or restrictions on the choice of a method of making a fiber reinforced polymer composition as long as the effects of the present invention are not deteriorated.

In one embodiment, for example, a method of making a fiber reinforced polymer composition is provided, the method comprising combining a reinforcing fiber and an adhesive composition, wherein the adhesive composition comprises at least a thermosetting resin, a curing agent and a hard interfacial material, the reinforcing fiber is suitable for concentrating the hard interfacial material in-situ during cure in an interfacial region between the reinforcing fiber and the adhesive composition, and the interfacial region comprises the interfacial material.

Another embodiment relates to a method to create a reinforced interphase in a fiber reinforced polymer composition, wherein a resin infusion method with a low resin viscosity is utilized. In such a case, a migrating agent is concentrated outside a fiber fabric and/or a fiber mat that is stacked to make a desired reform. An adhesive composition comprising at least a thermosetting resin, a curing agent, and an interfacial material is pressurized and infiltrated into the reform, allowing some of the migrating agent to partially mix with the adhesive composition during the infiltration process and penetrate the reform. By having some of the migrating agent in the adhesive composition, the reinforced interphase could be formed during cure of the fiber reinforced polymer composition. The remainder of the migrating agent is concentrated in the interlayer between two fabric sheets or mats and could improve the impact and damage resistance of the fiber reinforced polymer composition. Thermoplastic particles with an average size less than 50 $\mu$m could be used as the migrating agent. Examples of such thermoplastic materials include but are not limited to polysulfones, polyethersulfones, polyamides, polyamideimides, polyimides, polyetherimides, polyetherketones, and polyetheretherketones, their derivatives, similar polymers, and mixtures thereof.

The fiber reinforced polymer compositions of the present invention may, for example, be heat-curable or curable at room temperature. In other embodiments, the aforementioned fiber reinforced polymer compositions can be cured by a one-step cure to a final cure temperature, or by a multiple-step cure in which the fiber reinforced polymer composition is dwelled (maintained) at a certain dwell temperature for a certain period of dwell time to allow an interfacial material in the fiber reinforced polymer composition to migrate onto the reinforcing fiber's surface, and ramped up and cured at the final cure temperature for a desired period of time. The dwell temperature could be in a temperature range in which the adhesive composition has a low viscosity. The dwell time could be at least about five minutes. The final cure temperature of the adhesive resin composition could be set after the adhesive resin composition reaches a degree of cure of at least 20 % during the ramp up. The ramp rate could be at least 0.5 °C/min, at least 5 °C/min, at least 20 °C/min or even at least 50 °C/min. The final cure temperature could be about 220 °C or less, or about 180 °C or less. The fiber reinforced polymer composition could be kept at the final cure temperature until a degree of cure reaches at least 80 %. Vacuum and/or external pressure could be applied to the reinforced polymer composition during cure. Examples of these methods include autoclave, vacuum bag, pressure-press (i.e., one side of the article to be cured contacts a heated tool's surface while the other side is under pressurized air with or without a heat medium), or a similar method. Note that other curing methods using an energy source other than thermal, such as electron beam, conduction method, microwave oven, or plasma-assisted microwave oven, or a combination of such methods could be applied. In addition, other external pressure methods such as shrink wrap, bladder blowing, platens, or table rolling could be used.

For fiber reinforced polymer composites, one embodiment of the present invention relates to a manufacturing method to combine fibers and resin matrix (adhesive composition) to produce a curable fiber reinforced polymer composition (sometimes referred to as a "prepreg") which is subsequently cured to produce a composite article. Employable is a wet method in which fibers are soaked in a bath of the resin matrix dissolved in a solvent such as methyl ethyl ketone or methanol, and withdrawn from the bath to remove solvent.

Another suitable method is a hot melt method, where the adhesive composition is heated to lower its viscosity, directly applied to the reinforcing fibers to obtain a resin-impregnated prepreg; or alternatively, as another method, the adhesive composition is coated on a release paper to obtain a thin film. The film is consolidated onto both surfaces of a sheet of reinforcing fibers by heat and pressure.

To produce a composite article from the prepreg, for example, one or more plies are applied onto a tool surface or mandrel. This process is often referred to as tape-wrapping. Heat and pressure are needed to laminate the plies. The tool is collapsible or removed after curing. Curing methods such as autoclave and vacuum bag in an oven equipped with a vacuum line could be used. A one-step cure cycle or multiple-step cure cycle in that each step is performed at a certain temperature for a period of time could be used to reach a cure temperature of about 220 °C or even 180 °C or less. However, other suitable methods such as conductive heating, microwave heating, electron beam heating and similar methods, can also be employed. In an autoclave method, pressure is provided to compact the plies, while a vacuum-bag method relies on the vacuum pressure introduced to the bag when the part is cured in an oven. Autoclave methods could be used for high quality composite parts. In other embodiments, any methods that provide suitable heating rates of at least 0.5 °C/min, at least 1 °C/min, at least 5 °C/min, or even at least 10 °C/min and vacuum and/or compaction pressures by an external means could be used.

Without forming prepregs, the adhesive composition may be directly applied to reinforcing fibers which are conformed onto a tool or mandrel for a desired part's shape, and cured under heat. The methods include, but are not limited to, filament-winding, pultrusion molding, resin injection molding and resin transfer molding/resin infusion, vacuum assisted resin transfer molding.

The resin transfer molding method is a method in which a reinforcing fiber base material is directly impregnated with a liquid thermosetting resin composition and cured. Since this method does not involve an intermediate product, such as a prepreg, it has great potential for molding cost reduction and is advantageously used for the manufacture of structural materials for spacecraft, aircraft, rail vehicles, automobiles, marine vessels and so on.

The filament winding method is a method in which one to several tens of reinforcing fiber rovings are drawn together in one direction and impregnated with a thermosetting resin composition as they are wrapped around a rotating metal core (mandrel) under tension at a predetermined angle. After the wraps of rovings reach a predetermined thickness, it is cured and then the metal core is removed.

The pultrusion method is a method in which reinforcing fibers are continuously passed through an impregnating tank filled with a liquid thermosetting resin composition to impregnate them with the thermosetting resin composition, followed by a squeeze die and heating die for molding and curing, by continuously drawing them using a tensile machine. Since this method offers the advantage of continuously molding fiber-reinforced composite materials, it is used for the manufacture of reinforcement fiber fiber-reinforced plastics (FRPs) for fishing rods, rods, pipes, sheets, antennas, architectural structures, and so on.

Composite articles in accordance with the invention are advantageously used in sports applications, general industrial applications, and aerospace and space applications. Concrete sports applications in which these materials are advantageously used include golf shafts, fishing rods, tennis or badminton rackets, hockey sticks and ski poles. Concrete general industrial applications in which these materials are advantageously used include structural materials for vehicles, such as automobiles, bicycles, marine vessels and rail vehicles, drive shafts, leaf springs, windmill blades, pressure vessels, flywheels, papermaking rollers, roofing materials, cables, and repair/reinforcement materials.

Tubular composite articles in the invention are advantageously used for golf shafts, fishing rods, and the like.

**Examination of a reinforced interphase**

For visual inspection, a high magnification optical microscope or a scanning electron microscope (SEM) could be used to document the failure modes and location/distribution of an interfacial material. The interfacial material could be found on the surface of the fiber along with the adhesive composition after the bonded structure fails. In such cases, mixed mode failure or cohesive failure of the adhesive composition is possible. Good particle migration refers to about 50% or more coverage of the particles on the fiber surface (herein referred to as "particle coverage"), no particle migration refers to less than about 5 % coverage, and some particle migration refers to about 5-50 % coverage. While a particle coverage of at least 50 % is needed to simultaneously improve a wide range of mechanical properties of the fiber reinforced polymer composites, in some cases a particle coverage of at least 10 % or even at least 20 % is suitable to improve some certain desired properties.

Several methods are known to one skilled in the art to examine and locate the presence of the interfacial material through thickness. An example is to cut the composite structure at 90°, 45° with respect to the fiber's direction.

The cut cross-section is polished mechanically or by an ion beam such as argon, and examined under a high magnification optical microscope or electron microscope. SEM is one possible method. Note that in the case where SEM cannot observe the interphase, other available state-of-the-art instruments could be used to document the existence of the interphase and its thickness through another electron scanning method such as TEM, chemical analyses (e.g., X-ray photoelectron spectroscopy (XPS), Time-of-Flight Secondary Ion Mass Spectrometry (ToF-SIMS), infrared (IR) spectroscopy, Raman, the alike or similar) or mechanical properties (e.g., nanoindentation, atomic force microscopy (AFM)), or a similar method.

An interfacial region or an interphase where the interfacial material is concentrated can be observed and documented. The interphase is typically measured from the fiber's surface to a definite distance away where the interfacial material is no longer concentrated compared to the concentration of the interfacial material in the surrounding resin-rich areas. Depending on the amount of the cured adhesive found between two fibers, the interphase could be extended up to 100 micrometers, comprising one or more layers of the interfacial material of one or more different kinds. The interphase thickness could be up to about 1 fiber diameter, comprising one or more layers of the interfacial material of one or more different kinds. The thickness could be up to about ½ of the fiber diameter.

**Examples**

Next, certain embodiments of the invention are illustrated in detail by means of the following examples using the following components:

| Component | Product name | Manufacturer | Description |
|---|---|---|---|
| Epoxy | ELM434 | Sumitomo Chemical Co., Ltd. | Tetra glycidyl diamino diphenyl methane with a functionality of 4, having an average EEW of 120 (ELM434) |
| | Epon® 828 | Momentive Specialty Chemicals | Difunctional bisphenol A/ epichlorohydrin, having an average EEW of 188 (EP828) |
| | Epon® 825 | Momentive | Diglycidyl ether of bisphenol A with a functionality of 2, having an average EEW of 177 (EP825) |
| | Epiclon® 830 | Dainippon Ink and Chemicals, Inc. | Diglycidyl ether of bisphenol F with a functionality of 2, having an average EEW of 177 (EPc830) |
| | | Nippon Kayaku K.K. | Glycidylaniline with a functionality of 2 and having an average EEW of 166 (GAN) |
| | F-a Type benzoxazine | Shikoku Chemicals Corporation | Bisphenol-F benzoxazine Type 1, equivalent weight 217 (BOX-F) |
| | Epon® 2005 | Momentive | Diglycidyl ether of bisphenol A with a functionality of 2, having an average EEW of 1300 (EP2005) |
| Migrating agent | Sumikaexcel® PES5003P | Sumitomo Chemical Co., Ltd. | Polyethersulfone, MW 38,200 (PES1) |
| | VW-10700RP | Solvay | Polyethersulfone, MW 21,000 (PES2) |
| | Ultem® 1000P | Sabic | Polyetherimide (PEI) |
| Interlayer toughener | Grilamid® TR55 | EMS-Grivory | Polyamide (PA) |
| | Micropearl NI type | Sekisui Chemical Co., Ltd. | Divinylbenzene polymer metal plating (DVB-Ni) |

(continued)

| Component | Product name | Manufacturer | Description |
|---|---|---|---|
| Curing agent | Aradur® 9664-1 | Huntsman Advanced Materials | 4,4'-diaminodiphenyl sulfone (4,4-DDS) |
| | Aradur® 9719-1 | Huntsman Advanced Materials | 3,3-diaminodiphenyl sulfone (3,3-DDS) |
| | Anthranilamide | Sigma Aldrich | 2-Aminobenzamide or anthranilamide (AAA) |
| Interfacial material | Kane Ace MX416 | Kaneka Texas Corporation | 25wt% core-shell rubber particles (CSR) in an epoxy resin |
| | Silica-X | Toray Industries, Inc. | Epoxy functionalized silica powder 100nm (Silica) in an epoxy resin |
| | C S1-25 | Arkema | 25wt% unfunctionalized multi-wall carbon nanotubes (CNT1) in bisphenol A epoxy, solid |
| | CNT-X | Toray Industries, Inc. | 3wt% MWCNT functionalized with epoxy functional group (CNT2) in an epoxy resin |
| | CB-X | U.S. Research Nanomaterials | Epoxy functionalized carbon black powder (CB) in an epoxy resin |
| Fiber | T700GC-12K-41E | Toray Industries, Inc. | 12,000 fibers, tensile strength 4.9 GPa, tensile modulus 240 GPa, tensile strain 2.0%, type-4 sizing for epoxy, phenolic, BMI resin systems (T700G-41) |
| | T800SC-24K-10E | Toray Industries, Inc. | 24,000 fibers, tensile strength 5.9 GPa, tensile modulus 290 GPa, tensile strain 2.0%, type-1 sizing for epoxy resin systems (T800S-10) |
| | T800GC-24K-31E | Toray Industries, Inc. | 24,000 fibers, tensile strength 5.9 GPa, tensile modulus 290 GPa, tensile strain 2.0%, type-3 sizing for epoxy resin systems (T800G-31). |
| | MX-12K-30E | Toray Industries, Inc. | 12,000 fibers, tensile strength 4.9 GPa, tensile modulus 370 GPa, tensile strain 1.2%, density 1.77 g/cm$^3$, type-3 sizing for epoxy resin systems (MX-30) |

CNT-X material was made from short length epoxy functionalized MWCNT (Multi-wall carbon nanotubes) of 1-5$\mu$m and a mixture of epoxies according to the below recipes in Table 1. Oxidized MWCNT and glycidoxypropyltrimethoxy silane (GPS) were purchased from U.S. Research Nanomaterials and Gelest, respectively. The CNTs were placed in a solution of 3wt% GPS in methanol/DI water (95/5wt%) and stirred for 90 min. The solids were removed by a centrifuge and redispersed into fresh methanol. The procedure was repeated two times to obtain a final dispersion of epoxy-functionalized CNT in methanol. The dispersion was mixed with the epoxy mixture and methanol was removed under heat and vacuum.

The procedure was repeated to make a carbon black/epoxy mixture after the carbon black was oxidized in concentrated nitric acid for 2 hr at 80 °C.

Silica-X material (an epoxy-functionalized nanosilica) was made by incorporating AngstromSphere silica powder (100nm) purchased from Fiber Optic Center, Inc. into a mixture of epoxies according to the below recipes in Table 1. Glycidoxypropyltrimethoxy silane (GPS) was purchased from Gelest. Silica powder was placed in a solution of 3wt% GPS in methanol/DI water (95/5wt%) and stirred for 90 min. The solids were removed by a centrifuge and redispersed into fresh methanol. The procedure was repeated two times to obtain a final dispersion of functionalized silica in methanol. The dispersion was mixed with the epoxy mixture and methanol was removed under heat and vacuum.

MX fibers were made using a similar PAN precursor in a similar spinning process as T800S fibers. However, to obtain a higher modulus, up to a maximum carbonization temperature of 3000°C could be applied. For surface treatment and sizing application, similar processes were utilized. For these MX fibers, a ratio of oxygen to carbon was found to be about 0.1.

## Comparative Examples 1-7 and Examples 1-5

Comparative Examples 1-6 and Examples 1-5 show the effects of an interphase and adhesion on mechanical properties and conductivity of a fiber composite system. T800S-10 and T800G-31 fibers were used to simulate low-to-intermediate and high adhesion, respectively.

Appropriate amounts of each component of a resin composition were charged into a mixer preheated at 100°C. After charging, the temperature was increased to 160 °C while the mixture was agitated, and held for 1hr. After that, the mixture was cooled to 65 °C and the curing agent was charged. The final resin mixture was agitated for 1 hr, then discharged and a portion was stored in a freezer.

Some of the hot mixture was degassed in a planetary mixer rotating at 1500 rpm for a total of 20 min, and poured into a metal mold with 0.25 in thick Teflon® insert. The resin was heated to 180 °C at a ramp rate of 1.7 °C/min, allowed to dwell for 2 hr to complete curing, and finally cooled down to room temperature. Resin plates were prepared for testing according to ASTM D-790 for flexural test.

To make a prepreg, the hot resin was first cast into a thin film using a knife coater onto a release paper. The film was consolidated onto a bed of fibers on both sides by heat and compaction pressure. A UD prepreg having a carbon fiber area weight of about 190 g/m$^2$ and resin content of about 35% by weight was obtained. The prepregs were cut and hand laid up with the sequence listed in Table 2 for each type of mechanical test, followed an ASTM procedure and a z-direction electrical conductivity test. Panels were cured in an autoclave at 180 °C for 2 hr with a ramp rate of 1.7 °C/min and a pressure of 0.59 MPa.

As shown in for the low-to-intermediate adhesion systems with ILSS less than 90 MPa (13 ksi), conductivity in Comparative Example 1 was about 2 S/m. Yet, the conductivity was reduced to less than 1 S/m as a non-conductive interphase was introduced to this system (i.e., adhesion was improved), as in Comparative Example 2, and increased to about 4.5 S/m in Comparative Example 3 when a CNT1 was incorporated into the resin and no interphase was formed (i.e., no improvement in adhesion was observed) in this case.

As shown for high adhesion systems with ILSS greater than 90 MPa (13 ksi), conductivity in Comparative Example 4 was about 10$^{-3}$ S/m, which is extremely very low versus the corresponding system with T800S-10 fiber. When a non-conductive interphase was introduced to this system, as in Comparative Example 5, conductivity decreased to about half. Yet, when CNT1 was introduced to the resin as observed in Comparative Examples 6-7, significant improvement in conductivity was seen but never reached 1 S/m. This implies that CNT1 (non-functionalized CNT) were not concentrated enough in the interfacial region to regain conductive paths that was lost by a good coverage of the resin (good adhesion). Surprisingly, as epoxy-functionalized CNT2 were introduced in Example 1, some of the CNT2 could migrate to the interfacial region, which leads to a conductivity exceeding 1 S/m.

Examples 2-3 confirmed the conductivity seen in Example 1 with different resin systems for improved mechanical performance of the composites. It was anticipated that a higher amount of CNT2 in the interphase using a smaller aspect ratio could further increase conductivity. Yet, since a higher modulus resin was used in these cases, mechanical properties such as tensile, ILSS and compression were increased significantly from systems having a lower modulus resin.

When the aspect ratio of the interfacial material was reduced in Examples 4-5 (carbon black vs. CNT), more particles could migrate to the interphase and therefore conductivity was increased to about 2 S/m, thereby regaining the conductivity that had been lost by the adhesion insulation layer and providing a conductivity comparable to Comparative Example 1 (low-to-intermediate adhesion system) where conductive paths through the thickness of the composite are predominantly achieved by fiber-fiber touching.

## Examples 6-9

Resins, prepreg and mechanical and conductivity tests were performed using procedures as in previous Examples. These systems are high adhesion systems using T700G-41 fibers. Functionalized carbon black was used as the conductive interfacial material while functionalized silica and CSR are used as the non-conductive interfacial material.

As shown in Examples 6-7, the higher the amount of carbon blacks the higher the conductivity. Additional amounts of carbon blacks that do not go to the interphase but stay in the bulk resin provide additional conductive paths through the resin, similar to Comparative Example 3 ((low-to-intermediate adhesion system).

Interestingly, when both conductive and non-conductive interfacial materials were introduced into the interphase in Examples 8-9, there was a migration competition between two types of these interfacial materials, leading to some reduction of conductivity yet significantly improving mechanical performance of these systems.

## Comparative Examples 8-11 and Example 10

Resins, prepreg and mechanical and conductivity tests were performed using procedures as in previous examples. These systems are high adhesion systems using T800G-31. These systems demonstrated the difficulty in increasing conductivity when an interlayer toughener such as PA is used.

The interlayer tougheners create an insulation layer between two beds of fibers and significantly disrupt the conductive paths. As shown in Comparative Example 8, conductivity was about ¼ of the similar system without the interlayer tougheners. However, this problem can be resolved effectively by including carbon black for a conductive interphase formation and a conductive interlayer toughener (DVB-Ni) in the interlayer, as seen in Example 10. Without this combination conductivity could not reach 1 S/m, as seen in Comparative Examples 9-11.

**Comparative Example 12 and Example 11**

Resins, prepreg and mechanical and conductivity tests were performed using procedures as in previous examples. These systems are high adhesion systems using the high modulus carbon fiber MX-30.

As shown in Example 11, when a conductive interphase was engineered, conductivity of this system increased to about 1.5 S/m from 0.0009 S/m in the control (Comparative Example 12), while mechanical properties remained similar for both systems.

The above description is presented to enable a person skilled in the art to make and use the invention, and is provided in the context of a particular application and its requirements.

This application discloses several numerical range limitations. The numerical ranges disclosed inherently support any range within the disclosed numerical ranges though a precise range limitation is not stated verbatim in the specification because this invention can be practiced throughout the disclosed numerical ranges.

Table 1

| | | | C.E. 1 | C.E. 2 | C.E. 3 | C.E. 4 | C.E. 5 | C.E. 6 | C.E. 7 | Ex. 1 | Ex. 2 | Ex. 3 | Ex. 4 | Ex. 5 | Ex. 6 | Ex. 7 | Ex. 8 | Ex. 9 | C.E. 8 | C.E. 9 | C.E. 10 | C.E. 11 | Ex. 10 | C.E. 12 | Ex. 11 |
|---|---|---|---|---|---|---|---|---|---|---|---|---|---|---|---|---|---|---|---|---|---|---|---|---|---|
| Resin matrix composition (phr) | Epoxy | ELM434 | 60 | 60 | 60 | 60 | 60 | 60 | 60 | 60 | 60 | 60 | 60 | 60 | 60 | 60 | 60 | 60 | 60 | 60 | 60 | 60 | 60 | 60 | 60 |
| | | Epon825 | 20 | 20 | 20 | 20 | 20 | 20 | 20 | 20 | 0 | 0 | 20 | 0 | 20 | 20 | 20 | 20 | 20 | 20 | 20 | 20 | 20 | 20 | 20 |
| | | EPc830 | 20 | 20 | 20 | 20 | 20 | 20 | 20 | 20 | 0 | 0 | 20 | 0 | 0 | 0 | 0 | 0 | 0 | 0 | 0 | 0 | 0 | 10 | 10 |
| | | Ep828 | 0 | 0 | 0 | 0 | 0 | 0 | 0 | 0 | 20 | 20 | 0 | 0 | 20 | 20 | 20 | 20 | 0 | 0 | 0 | 0 | 0 | 0 | 0 |
| | | EPON2005 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | GAN | 0 | 0 | 0 | 0 | 0 | 0 | 0 | 0 | 20 | 20 | 0 | 0 | 0 | 0 | 0 | 0 | 20 | 20 | 20 | 20 | 20 | 10 | 10 |
| | | BOX-F | 0 | 0 | 0 | 0 | 0 | 0 | 0 | 0 | 0 | 0 | 0 | 40 | 0 | 0 | 0 | 0 | 0 | 0 | 0 | 0 | 0 | 0 | 0 |
| | Curing agent | 4, 4'-DDS | 45 | 45 | 45 | 45 | 45 | 45 | 45 | 45 | 0 | 45 | 0 | 45 | 45 | 45 | 45 | 45 | 45 | 45 | 45 | 45 | 45 | 0 | 0 |
| | | 3, 3'-DDS | 0 | 0 | 0 | 0 | 0 | 0 | 0 | 0 | 0 | 45 | 0 | 0 | 0 | 0 | 0 | 0 | 0 | 0 | 0 | 0 | 0 | 0 | 0 |
| | | AAA | 0 | 0 | 0 | 0 | 0 | 0 | 0 | 0 | 0 | 0 | 0 | 0 | 0 | 0 | 0 | 0 | 0 | 0 | 0 | 0 | 0 | 31 | 31 |
| | Interfacial material | CSR | 0 | 2.5 | 0 | 0 | 2.5 | 0 | 0 | 0 | 0 | 0 | 0 | 0 | 0 | 0 | 0 | 5 | 0 | 0 | 0 | 0 | 0 | 0 | 0 |
| | | Silica | 0 | 0 | 0 | 0 | 0 | 0 | 0 | 0 | 0 | 0 | 0 | 0 | 0 | 0 | 10 | 0 | 0 | 0 | 0 | 0 | 0 | 0 | 0 |
| | | CNT1 | 0 | 0 | 5 | 0 | 0 | 5 | 10 | 0 | 0 | 0 | 0 | 0 | 0 | 0 | 0 | 0 | 0 | 5 | 5 | 0 | 0 | 0 | 0 |
| | | CNT2 | 0 | 0 | 0 | 0 | 0 | 0 | 0 | 5 | 5 | 5 | 0 | 0 | 0 | 0 | 0 | 0 | 0 | 0 | 0 | 0 | 0 | 0 | 0 |
| | | CB | 0 | 0 | 0 | 0 | 0 | 0 | 0 | 0 | 0 | 0 | 5 | 5 | 5 | 10 | 10 | 10 | 0 | 0 | 0 | 5 | 5 | 0 | 10 |
| | Migration agent | PES1 | 6 | 6 | 6 | 6 | 6 | 6 | 6 | 6 | 0 | 0 | 6 | 0 | 0 | 0 | 0 | 0 | 0 | 0 | 0 | 0 | 0 | 0 | 0 |
| | | PES2 | 0 | 0 | 0 | 0 | 0 | 0 | 0 | 0 | 12 | 12 | 0 | 12 | 12 | 12 | 12 | 12 | 0 | 0 | 0 | 0 | 0 | 14 | 14 |
| | | PEI | 0 | 0 | 0 | 0 | 0 | 0 | 0 | 0 | 0 | 0 | 0 | 0 | 0 | 0 | 0 | 0 | 9 | 9 | 9 | 9 | 9 | 0 | 0 |
| | Optional | DVB-Ni | 0 | 0 | 0 | 0 | 0 | 0 | 0 | 0 | 0 | 0 | 0 | 0 | 0 | 0 | 0 | 0 | 0 | 0 | 1 | 0 | 1 | 0 | 0 |
| | | PA | 0 | 0 | 0 | 0 | 0 | 0 | 0 | 0 | 0 | 0 | 0 | 0 | 0 | 0 | 0 | 0 | 30 | 30 | 30 | 30 | 30 | 0 | 0 |
| Fiber (wt%) | Type-1 sizing | T800S-10E | 100 | 100 | 100 | 0 | 0 | 0 | 0 | 0 | 0 | 0 | 0 | 0 | 0 | 0 | 0 | 0 | 0 | 0 | 0 | 0 | 0 | 0 | 0 |
| | Type-3 sizing | T800G-31 | 0 | 0 | 0 | 100 | 100 | 100 | 100 | 100 | 100 | 100 | 100 | 100 | 0 | 0 | 0 | 0 | 100 | 100 | 100 | 100 | 100 | 0 | 0 |
| | | MX-30 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | Type-4 sizing | T700G-41E | 0 | 0 | 0 | 0 | 0 | 0 | 0 | 0 | 0 | 0 | 0 | 0 | 100 | 100 | 100 | 100 | 0 | 0 | 0 | 0 | 0 | 100 | 100 |
| Cured resin | Flexure modulus @ RTD (GPa) | | 3.2 | 3.0 | 3.2 | 3.2 | 3.2 | 3.2 | 3.2 | 3.5 | 3.9 | 3.2 | 4.7 | 3.5 | 3.5 | 3.8 | 3.4 | 3.2 | 3.2 | 3.2 | 3.2 | 3.2 | 3.2 | 4.9 | 4.9 |
| Interphase | Particle coverage | Yes: >50% Some>30% No: <50% | No | Yes | No | No | Yes | No | No | Some | Some | Some | Yes | Yes | Yes | Yes | Yes | Yes | No | No | No | No | Yes | No | Yes |
| Composite | | Electrical conductivity (S/m) | 2.1 | 0.9 | 4.5 | 8E-04 | 4E-04 | 0.4 | 0.5 | 1.1 | 1.2 | 1.1 | 2.1 | 1.9 | 2.2 | 3.3 | 2.5 | 2.6 | 2E-04 | 0.2 | 0.3 | 0.4 | 1.5 | 9E-04 | 1.5 |
| | Tension | Ultimate strength* (ksi) | 441 | 417 | 435 | 324 | 404 | 330 | 350 | 340 | 444 | 424 | 360 | 440 | 352 | 360 | 390 | 400 | 404 | 411 | 400 | 415 | 408 | 285 | 280 |
| | | Ultimate strength*MPa | 3041 | 2875 | 2999 | 2234 | 2786 | 2275 | 2413 | 2344 | 3061 | 2923 | 2482 | 3034 | 2427 | 2482 | 2689 | 2758 | 2786 | 2834 | 2758 | 2861 | 2813 | 1965 | 1931 |
| | | Translation (%) | 85 | 85 | 85 | 66 | 82 | 67 | 70 | 71 | 90 | 85 | 80 | 90 | 82 | 83 | 90 | 93 | 82 | 82 | 80 | 83 | 83 | 86 | 86 |
| | Adhesion | Interlaminar shear strength (ksi) | 12.5 | 13.2 | 12.6 | 16.9 | 14.9 | 16.5 | 16.2 | 16.5 | 19.4 | 18.0 | 15.1 | 15.2 | 16.0 | 15.8 | 14.8 | 15.2 | 14.9 | 14.9 | 14.8 | 14.8 | 15.0 | 16.2 | 16.5 |
| | | Interlaminar shear strength (MPa) | 86 | 91 | 87 | 117 | 103 | 114 | 112 | 114 | 134 | 124 | 104 | 105 | 110 | 109 | 102 | 105 | 103 | 103 | 102 | 102 | 103 | 112 | 114 |
| | Compression | Ultimate strength* (ksi) | 205 | 191 | 210 | 228 | 190 | 228 | 220 | 230 | 225 | 237 | 220 | 235 | 219 | 215 | 235 | 200 | 195 | 199 | 200 | 199 | 201 | 240 | 235 |
| | | Ultimate strength*MPa | 1413 | 1317 | 1448 | 1572 | 1310 | 1572 | 1517 | 1586 | 1551 | 1634 | 1517 | 1620 | 1510 | 1482 | 1620 | 1379 | 1345 | 1372 | 1379 | 1372 | 1386 | 1655 | 1620 |

* normalized to Vf=60%

EP 2 938 659 B1

Table 2

| Test Panel | Test method | Panel Size (mm x mm) | Ply Lay-up Configuration | Test Condition |
|---|---|---|---|---|
| 0deg-Tensile | ASTM D 3039 | 300 x 300 | $(0)_6$ | RTD |
| Compression strength | ASTM D 695/ASTM D 3410 | 300 x 300 | $(0)_6$ | RTD |
| ILSS | ASTM D-2344 | 300 x 300 | $(0)_{12}$ | RTD |
| Conductivity* | 4-point probe | 350 x 300 | $[+45°/0°/-45°/90°]_{2s}$ | RTD |
| * see description below | | | | |

*Translation factor.* Percent translation is a measure of how effectively fiber's strength is utilized in a fiber reinforced polymer composite. It was calculated from the equation below, where a measured tensile strength (TS) is normalized by a measured strand strength of fibers and fiber volume fracture ($V_f$) in the fiber reinforced polymer composite. Note that $V_f$ can be determined from an acid digestion method.

$$\% \, translation = \frac{TS}{Strand \; strength \; x \; V_f} \, x \, 100$$

*Z-direction electrical conductivity measurement.* 25 mm x 25 mm coupons ($W_1$ x $W_2$) are prepared from the panel. Both top and bottom surfaces of a coupon are polished mechanically to remove the top layers up to 50 $\mu$m and the coupon's thickness (t) is determined. A silver paint (Dotite D-550) is painted on polished surfaces, followed by applying a 25-mm wide copper tape (3M 1181). The volumetric resistivity (RV) is determined from the below. Electrical conductivity is 1/RV

$$RV = \frac{W_1 \; x \; W_2}{t} \, x \; R$$

where R is the resistance measured by a digital multimeter with four probe method between the top and bottom surfaces of the coupon (Advantest R6581)

**Claims**

1.  A fiber reinforced polymer composition comprising a reinforcing fiber and an adhesive composition, wherein one or more components of the adhesive composition are capable of chemically reacting with functional groups on the reinforcing fiber surface to form crosslinks such that, when cured, the adhesive composition forms good bonds to the reinforcing fiber, wherein good bonds means an interlaminar shear strength (ILSS) of at least 90 MPa (13ksi) obtained by ASTM D-2344 of the cured fiber reinforced polymer composition, wherein the fiber reinforced polymer composition has an electrical conductivity in the z-direction or thickness direction, measured by a digital multimeter with four probe method of at least 1 S/m, wherein the adhesive composition comprises at least a thermosetting resin comprising an epoxy resin or benzoxazine resin, a curing agent comprising an aromatic diamine, an amidoamine or a mixture thereof and an interfacial material comprising a conductive material selected from carbon nanotube, carbon black and a mixture thereof, the reinforcing fiber is suitable for concentrating the interfacial material in an interfacial region between the reinforcing fiber and the adhesive composition, such that the interfacial region comprises an adhesion layer comprising at least the functional groups on the fiber surface that can react with at least one component of the adhesive composition and a conductive layer, and the adhesion layer is closer to the reinforcing fiber than the conductive layer and has a composition different from that of the conductive layer, and the conductive layer comprises at least the interfacial material, wherein particle coverage of interfacial material on the fiber surface is at least 10%, wherein the amount of curing agent is up to 75 parts by weight per 100 parts by weight of total thermosetting resin and the interfacial material presents in an amount of between 1 to 10 parts by weight per 100 parts by weight of total thermosetting resin.

2. The fiber reinforced polymer composition of claim 1, wherein the adhesive composition further comprises a migrating agent, an accelerator, a thermoplastic resin, a toughener, an interlayer toughener, a conductive material or a combination thereof.

3. The fiber reinforced polymer composition of claim 2, wherein the adhesive composition comprises an interlayer toughener comprising a conductive material, a non-conductive material or a combination thereof.

4. The fiber reinforced polymer composition of claim 2, wherein the migrating agent is a polyethersulfone and the interfacial material is an epoxy functionalized carbon black.

5. A prepreg composition comprising the fiber reinforced polymer composition of any one of claims 1 to 4.

6. A method of manufacturing a composite article comprising curing the fiber reinforced polymer composition of any one of claims 1 to 4.

**Patentansprüche**

1. Faserverstärkte Polymerzusammensetzung, umfassend eine Verstärkungsfaser und eine Kleberzusammensetzung, wobei eine oder mehrere Komponenten der Kleberzusammensetzung in der Lage sind, mit funktionellen Gruppen auf der Verstärkungsfaseroberfläche zu reagieren, um Vernetzungen zu bilden, sodass die Kleberzusammensetzung nach dem Trocknen gute Bindungen mit der Verstärkungsfaser ausbildet, wobei gute Bindungen bedeutet, dass gemäß ASTM D-2344 eine interlaminare Scherfestigkeit (ILSS) von zumindest 90 MPa (13 ksi) der getrockneten faserverstärkten Polymerzusammensetzung erhalten wird, wobei die faserverstärkte Polymerzusammensetzung eine mit einem digitalen Multimeter gemäß dem Vier-Sonden-Verfahren gemessene elektrische Leitfähigkeit in z-Richtung oder Dickenrichtung von zumindest 1 S/m aufweist, wobei die Kleberzusammensetzung zumindest ein duroplastisches Harz, umfassend ein Epoxyharz oder Benzoxazinharz, einen Härter, umfassend ein aromatisches Diamin, ein Amidoamin oder ein Gemisch davon, und ein Grenzflächenmaterial, umfassend ein aus Kohlenstoffnanoröhrchen, Ruß oder einem Gemisch davon bestehendes leitendes Material, umfasst, wobei die Verstärkungsfaser zum Konzentrieren des Grenzflächenmaterials in einer Grenzflächenregion zwischen der Verstärkungsfaser und der Kleberzusammensetzung geeignet ist, sodass die Grenzflächenregion eine Kleberschicht, die zumindest die funktionellen Gruppen auf der Faseroberfläche, die mit zumindest einer Komponente der Kleberzusammensetzung reagieren, und eine leitende Schicht umfasst und die Kleberschicht näher an der Verstärkungsfaser liegt als die leitende Schicht und eine Zusammensetzung aufweist, die sich von jener der leitenden Schicht unterscheidet, und die leitende Schicht zumindest ein Grenzflächenmaterial umfasst, wobei die Partikelbedeckung des Grenzflächenmaterials auf der Faseroberfläche zumindest 10 % beträgt, wobei die Menge an Härter bis zu 75 Gewichtsteile pro 100 Gewichtsteile des gesamten duroplastischen Harzes beträgt und das Grenzflächenmaterial in einer Menge von 1 bis 10 Gewichtsteilen pro 100 Gewichtsteile des gesamten duroplastischen Harzes vorliegt.

2. Faserverstärkte Polymerzusammensetzung nach Anspruch 1, wobei die Kleberzusammensetzung weiters ein Migrationsmittel, einen Beschleuniger, ein duroplastisches Harz, einen Zähigkeitsvermittler, einen Grenzschichtzähigkeitsvermittler, ein leitendes Material oder eine Kombination davon umfasst.

3. Faserverstärkte Polymerzusammensetzung nach Anspruch 2, wobei die Kleberzusammensetzung einen Grenzschichtzähigkeitsvermittler umfasst, der ein leitendes Material, ein nichtleitendes Material oder eine Kombination davon umfasst.

4. Faserverstärkte Polymerzusammensetzung nach Anspruch 2, wobei das Migrationsmittel ein Polyethersulfon ist und das Grenzflächenmaterial ein Epoxyfunktionalisierter Ruß ist.

5. Prepreg-Zusammensetzung, umfassend eine faserverstärkte Polymerzusammensetzung nach einem der Ansprüche 1 bis 4.

6. Verfahren zur Herstellung eines Verbundgegenstands, umfassend das Härten einer faserverstärkten Polymerzusammensetzung nach einem der Ansprüche 1 bis 4.

**Revendications**

1. Composition polymère renforcée par des fibres comprenant une fibre de renfort et une composition adhésive, dans laquelle un ou plusieurs composants de la composition adhésive sont capables de réagir chimiquement avec des groupes fonctionnels sur la surface de la fibre de renfort pour former des réticulations de telle manière que, lorsqu'elle est durcie, la composition adhésive forme de bonnes liaisons avec la fibre de renfort, dans laquelle le terme « bonnes liaisons » désigne une résistance au cisaillement interlaminaire (ILSS) d'au moins 90 MPa (13 ksi) obtenue par la norme ASTM D-2344 de la composition polymère renforcée par des fibres durcie, dans laquelle la composition polymère renforcée par des fibres présente une conductivité électrique dans la direction z ou la direction de l'épaisseur, mesurée par un multimètre numérique à l'aide d'un procédé à quatre sondes d'au moins 1 S/m, dans laquelle la composition adhésive comprend au moins une résine thermodurcissable comprenant une résine époxy ou une résine de benzoxazine, un agent de durcissement comprenant une diamine aromatique, une amidoamine ou un mélange de celles-ci et un matériau d'interface comprenant un matériau conducteur choisi parmi un nanotube de carbone, du noir de carbone et un mélange de ceux-ci, la fibre de renfort est appropriée pour concentrer le matériau d'interface dans une région d'interface entre la fibre de renfort et la composition adhésive, de telle manière que la région d'interface comprend une couche d'adhérence comprenant au moins les groupes fonctionnels sur la surface de la fibre qui peuvent réagir avec au moins un composant de la composition adhésive et une couche conductrice, et la couche d'adhérence est plus proche de la fibre de renfort que la couche conductrice et a une composition différente de celle de la couche conductrice, et la couche conductrice comprend au moins le matériau d'interface, dans laquelle la couverture des particules du matériau d'interface sur la surface de la fibre est d'au moins 10 %, dans laquelle la quantité d'agent de durcissement est jusqu'à 75 parties en poids pour 100 parties en poids de résine thermodurcissable totale et le matériau d'interface est présent en une quantité entre 1 et 10 parties en poids pour 100 parties en poids de résine thermodurcissable totale.

2. Composition polymère renforcée par des fibres selon la revendication 1, dans laquelle la composition adhésive comprend en outre un agent de migration, un accélérateur, une résine thermoplastique, un agent de renforcement, un agent de renforcement intercouche, un matériau conducteur ou une combinaison de ceux-ci.

3. Composition polymère renforcée par des fibres selon la revendication 2, dans laquelle la composition adhésive comprend un agent de renforcement intercouche comprenant un matériau conducteur, un matériau non conducteur ou une combinaison de ceux-ci.

4. Composition polymère renforcée par des fibres selon la revendication 2, dans laquelle l'agent de migration est une polyéthersulfone et le matériau d'interface est un noir de carbone à fonction époxy.

5. Composition de préimprégné comprenant la composition polymère renforcée par des fibres selon l'une quelconque des revendications 1 à 4.

6. Procédé de fabrication d'un article composite comprenant le durcissement de la composition polymère renforcée par des fibres selon l'une quelconque des revendications 1 à 4.

**Figure 1**

22

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080213498 A1, Drzal
- WO 2007130979 A2
- WO 2012116261 A1, Nguyen
- US 2013344305 A
- JP 2012211310 A
- JP 2009074075 A

- US 6894113 B, Court
- US 7820760 B2
- US 20100280151 A1, Nguyen
- EP 1632533 A1
- EP 2123711 A1

**Non-patent literature cited in the description**

- **BEKYAROVA et al.** *Langmuir,* 2007, vol. 23, 3970
- **SUN ; BERG'S.** *Advances in Colloid and Interface Science,* 2003, vol. 105, 151-175
- *Journal of Chromatography A,* 2002, vol. 969, 59-72

- **RICH et al.** Round Robin Assessment of the Single Fiber Fragmentation Test. *Proceeding of the American Society for Composites: 17th Technical conference,* 2002